(19) Europäisches Patentamt
European Patent Office
Office européen des brevets

(11) **EP 4 235 845 A1**

(12) **EUROPEAN PATENT APPLICATION**
published in accordance with Art. 153(4) EPC

(43) Date of publication:
**30.08.2023 Bulletin 2023/35**

(51) International Patent Classification (IPC):
**H01M 4/13** (2010.01)   **H01M 4/62** (2006.01)
**H01M 4/66** (2006.01)

(21) Application number: **21882715.2**

(22) Date of filing: **15.10.2021**

(52) Cooperative Patent Classification (CPC):
**H01M 4/13; H01M 4/62;** H01M 4/66; Y02E 60/10

(86) International application number:
**PCT/JP2021/038163**

(87) International publication number:
**WO 2022/085574 (28.04.2022 Gazette 2022/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.10.2020 JP 2020177267**

(71) Applicant: **Maxell, Ltd.**
**Kyoto 618-8525 (JP)**

(72) Inventor: **TAKAICHI, Yuta**
**Otokuni-gun, Kyoto 618-8525 (JP)**

(74) Representative: **Diehl & Partner**
**Patent- und Rechtsanwaltskanzlei mbB**
**Erika-Mann-Straße 9**
**80636 München (DE)**

(54) **POSITIVE ELECTRODE FOR NON-AQUEOUS ELECTROLYTE SECONDARY BATTERY, METHOD FOR MANUFACTURING SAME, AND METHOD FOR INSPECTING SAME, AND NON-AQUEOUS ELECTROLYTE SECONDARY BATTERY AND METHOD FOR MANUFACTURING SAME**

(57) Provided are: a non-aqueous electrolyte secondary battery having excellent load characteristics and storage characteristics; a method for manufacturing the same; a positive electrode that can constitute the non-aqueous electrolyte secondary battery; a method for manufacturing the same; and a method for inspecting a positive electrode to manufacture a non-aqueous electrolyte secondary battery. The present invention relates to Goals 7 and 12 of the sustainable development goals (SDGs). The positive electrode for a non-aqueous electrolyte secondary battery of the present invention includes a positive-electrode mixture layer containing a positive-electrode active material and a conductive assistant on one surface or both surfaces of a current collector, and Rs/($\rho$v$\times$d) falls within a specific range in accordance with the thickness of the positive-electrode mixture layer, where Rs is an interface resistance ($\Omega$cm$^2$) between the positive-electrode mixture layer and the current collector, $\rho$v is a volume resistivity ($\Omega$cm) of the positive-electrode mixture layer, and d is the thickness (cm) of the positive-electrode mixture layer. The non-aqueous electrolyte secondary battery of the present invention includes a positive electrode, a negative electrode, a separator interposed between the positive electrode and the negative electrode, and a non-aqueous electrolyte, and the positive electrode is the positive electrode for a non-aqueous electrolyte secondary battery of the present invention.

FIG. 1

**Description**

Technical Field

The present invention relates to a non-aqueous electrolyte secondary battery that has excellent load characteristics and storage characteristics, a method for manufacturing the non-aqueous electrolyte secondary battery, a positive electrode that can constitute the non-aqueous electrolyte secondary battery, a method for manufacturing the positive electrode, and a method for inspecting a positive electrode to manufacture a non-aqueous electrolyte secondary battery.

Background Art

Non-aqueous electrolyte secondary batteries are used as power sources of portable electronic devices such as mobile phones and notebook personal computers, electric vehicles, and the like, and can contribute to achieving, among 17 sustainable development goals (SDGs) adopted by the United Nations, Goal 7 (to ensure access to affordable, reliable, sustainable and modern energy for all) and Goal 12 (to ensure sustainable consumption and production patterns).
Along with the diversification of applications, for example, improvement in load characteristics of non-aqueous electrolyte secondary batteries is desired in some cases.
In order to improve the load characteristics of a non-aqueous electrolyte secondary battery, it is effective to reduce the resistance value of an electrode, for example.
Patent Document 1 proposes setting an interface resistance between an electrode active material layer and a current collector layer so as to fall within a specific range in an electrode for a lithium ion battery that includes the electrode active material layer containing an electrode active material, a conductive assistant, and the like on at least one surface of the current collector layer, although this technique is not for improving load characteristics of a battery.

Prior Art Documents

Patent Document

Patent Document 1: WO 2018/016528

Disclosure of Invention

Problem to be Solved by the Invention

In order to reduce the resistance value of an electrode, it is conceivable to increase the amount of a conductive assistant, for example, but storage characteristics of the battery deteriorate in this case. Therefore, it is desired to develop a technique that can realize excellent load characteristics and storage characteristics of a non-aqueous electrolyte secondary battery at the same time.
The present invention was made in view of the above circumstances, and has an object of providing a non-aqueous electrolyte secondary battery that has excellent load characteristics and storage characteristics, a method for manufacturing the non-aqueous electrolyte secondary battery, a positive electrode that can constitute the non-aqueous electrolyte secondary battery, a method for manufacturing the positive electrode, and a method for inspecting a positive electrode to manufacture a non-aqueous electrolyte secondary battery.

Means for Solving Problem

A positive electrode for a non-aqueous electrolyte secondary battery according to the present invention includes a positive-electrode mixture layer containing a positive-electrode active material and a conductive assistant on one surface or both surfaces of a current collector, and $Rs/(\rho v \times d)$ is a value described below, where $Rs$ is an interface resistance ($\Omega cm^2$) between the positive-electrode mixture layer and the current collector, $\rho v$ is a volume resistivity ($\Omega cm$) of the positive-electrode mixture layer, and $d$ is a thickness (cm) of the positive-electrode mixture layer (thickness of the positive-electrode mixture layer on one surface of the current collector, this applies to the expression "thickness of the positive-electrode mixture layer" in the following description of the present specification).
(1) When the thickness of the positive-electrode mixture layer is 35 $\mu$m or more and less than 58 $\mu$m, $Rs/(\rho v \times d)$ is $1.0 \pm 0.2$.

(2) When the thickness of the positive-electrode mixture layer is 58 $\mu$m or more and less than 68 $\mu$m, Rs/($\rho$v$\times$d) is 0.55 to 1.6.
(3) When the thickness of the positive-electrode mixture layer is 68 $\mu$m or more and 80 $\mu$m or less, Rs/($\rho$v$\times$d) is 0.55 to 10.

A non-aqueous electrolyte secondary battery according to the present invention includes a positive electrode, a negative electrode, a separator interposed between the positive electrode and the negative electrode, and a non-aqueous electrolyte, and the positive electrode is the positive electrode for a non-aqueous electrolyte secondary battery according to the present invention.

A method for manufacturing a positive electrode for a non-aqueous electrolyte secondary battery according to the present invention includes, when forming a positive-electrode mixture layer containing a positive-electrode active material and a conductive assistant on one surface or both surfaces of a current collector, adjusting the thickness of the positive-electrode mixture layer and Rs/($\rho$v$\times$d) to values that satisfy any of (1), (2), and (3) described above.

A method for manufacturing a non-aqueous electrolyte secondary battery according to the present invention includes, when forming a non-aqueous electrolyte secondary battery including a positive electrode, a negative electrode, a separator interposed between the positive electrode and the negative electrode, and a non-aqueous electrolyte, using, as the positive electrode, a positive electrode for a non-aqueous electrolyte secondary battery manufactured using the method for manufacturing a positive electrode for a non-aqueous electrolyte secondary battery according to the present invention.

Furthermore, the present invention includes a method for inspecting a positive electrode for a non-aqueous electrolyte secondary battery including a positive-electrode mixture layer containing a positive-electrode active material and a conductive assistant on one surface or both surfaces of a current collector, the method including: a step of measuring an interface resistance Rs ($\Omega$cm$^2$) between the positive-electrode mixture layer and the current collector, a volume resistivity pv ($\Omega$cm) of the positive-electrode mixture layer, and a thickness d (cm) of the positive-electrode mixture layer, and calculating a value of Rs/($\rho$v$\times$d) with respect to the positive electrode for a non-aqueous electrolyte secondary battery; and a step of selecting a non-aqueous electrolyte secondary battery to which the positive electrode for a non-aqueous electrolyte secondary battery is to be applied, based on the value of Rs/($\rho$v$\times$d).

Effects of the Invention

According to the present invention, it is possible to provide a non-aqueous electrolyte secondary battery that has excellent load characteristics and storage characteristics, a method for manufacturing the non-aqueous electrolyte secondary battery, a positive electrode that can constitute the non-aqueous electrolyte secondary battery, a method for manufacturing the positive electrode, and a method for inspecting a positive electrode to manufacture a non-aqueous electrolyte secondary battery.

Brief Description of Drawings

[FIG. 1] FIG. 1 is a schematic plan view showing an example of a non-aqueous electrolyte secondary battery according to the present invention.
[FIG. 2] FIG. 2 is a cross-sectional view taken along the line I-I shown in FIG. 1.

Description of the Invention

<Positive Electrode for Non-Aqueous Electrolyte Secondary Battery>

A positive electrode for a non-aqueous electrolyte secondary battery (hereinafter may be simply referred to as a "positive electrode") according to the present invention includes a positive-electrode mixture layer that contains a positive-electrode active material and a conductive assistant on one surface or both surfaces of a current collector, and a value Rs/($\rho$v$\times$d) falls within a specific range in accordance with the thickness of the positive-electrode mixture layer.

As described above, if the resistance value of a positive electrode is reduced using a common technique to improve load characteristics of a non-aqueous electrolyte secondary battery, storage characteristics of the battery tend to be impaired. The inventor of the present invention carried out intensive studies and completed the present invention based on a finding that when an interface resistance Rs between the positive-electrode mixture layer and the current collector in the positive electrode and a product $\rho$v$\times$d of the volume resistivity ($\rho$v) of the positive-electrode mixture layer and the thickness (d) of the positive-electrode mixture layer satisfy a specific relationship, a battery produced using the positive electrode can have high degrees of load characteristics and storage characteristics at the same time, and the relationship between Rs and $\rho v \times d$ with which excellent load characteristics and storage characteristics of the battery can be realized at the same time varies according to the thickness of the positive-electrode mixture layer.

The positive electrode of the present invention includes the positive-electrode mixture layer containing the positive-electrode active material and the conductive assistant.

There is no particular limitation on the positive-electrode active material as long as a conventionally known positive-electrode active material for a non-aqueous electrolyte secondary battery, or in other words, an active material that can absorb and desorb Li ions is used. Specific examples of the positive-electrode active material include a spinel-type lithium manganese composite oxide represented by $LiM_xMn_{2-x}O_4$, where M represents at least one element selected from the group consisting of Li, B, Mg, Ca, Sr, Ba, Ti, V, Cr, Fe, Co, Ni, Cu, Al, Sn, Sb, In, Nb, Mo, W, Y, Ru, and Rh, and $0.01 \leq x \leq 0.5$, a layered compound represented by $Li_xNi_{(1-y-z)}Mn_yM_zO_{(2-k)}F_l$, where M represents at least one element selected from the group consisting of Co, Mg, Al, B, Ti, V, Cr, Fe, Cu, Zn, Zr, Mo, Sn, Ca, Sr, Ba, and W, $0.8 \leq x \leq 1.2$, $0 \leq y \leq 0.5$, $0 \leq z \leq 0.5$, $k + l < 1$, $-0.1 \leq k \leq 0.2$, and $0 \leq l \leq 0.1$, a lithium cobalt composite oxide represented by $LiCo_{1-x}M_xO_2$, where M represents at least one element selected from the group consisting of Al, Mg, Ti, Zr, Fe, Ni, Cu, Zn, Ga, Ge, Nb, Mo, Sn, Sb, and Ba, and $0 \leq x \leq 0.5$, a lithium nickel composite oxide represented by $LiNi_{1-x}M_xO_2$, where M represents at least one element selected from the group consisting of Al, Mg, Ti, Zr, Fe, Co, Cu, Zn, Ga, Ge, Nb, Mo, Sn, Sb, Mn, and Ba, and $0 \leq x \leq 0.5$, an olivine-type composite oxide represented by $LiM_{1-x}N_xPO_4$, where M represents at least one element selected from the group consisting of Fe, Mn, and Co, N represents at least one element selected from the group consisting of Al, Mg, Ti, Zr, Ni, Cu, Zn, Ga, Ge, Nb, Mo, Sn, Sb, and Ba, and $0 \leq x \leq 0.5$, a lithium titanium composite oxide represented by $Li_4Ti_5O_{12}$, and the like. These may be used alone or in a combination of two or more.

Examples of the conductive assistant contained in the positive-electrode mixture layer include: graphite; amorphous carbon materials such as carbon black (acetylene black, Ketjen black, etc.) and carbon materials including amorphous carbon generated on their surfaces; fibrous carbon (vapor-grown carbon fiber, carbon fiber obtained by spinning and then carbonizing pitch, etc.); and carbon nanotubes (various types of multilayer or single-layer carbon nanotubes). These may be used alone or in a combination of two or more.

The positive-electrode mixture layer usually contains a binder. Examples of the binder contained in the positive-electrode mixture layer include polyvinylidene fluoride (PVDF), polytetrafluoroethylene, polyacrylic acid, chitosan, styrene butadiene rubber (SBR), and carboxymethyl cellulose (CMC).

In the positive electrode, the ratio $Rs/(\rho v \times d)$ between the interface resistance Rs between the positive-electrode mixture layer and the current collector and the product $\rho v \times d$ of the volume resistivity ($\rho v$) of the positive-electrode mixture layer and the thickness (d) of the positive-electrode mixture layer is within a specific range in accordance with the thickness of the positive-electrode mixture layer as described below. If such a positive electrode is used in a non-aqueous electrolyte secondary battery, the battery can have high degrees of load characteristics and storage characteristics at the same time.

(1) When the thickness of the positive-electrode mixture layer is 35 $\mu$m or more (preferably 38 $\mu$m or more) and less than 58 $\mu$m, $Rs/(\rho v \times d)$ is $1.0 \pm 0.2$.
(2) When the thickness of the positive-electrode mixture layer is 58 $\mu$m or more and less than 68 $\mu$m, $Rs/(\rho v \times d)$ is 0.55 or more (preferably 0.8 or more) and 1.6 or less (preferably 1.26 or less).
(3) When the thickness of the positive-electrode mixture layer is 68 $\mu$m or more and 80 $\mu$m or less, $Rs/(\rho v \times d)$ is 0.55 or more (preferably 0.7 or more) and 10 or less (preferably 3.0 or less, and more preferably 1.7 or less).

Although the reason why it is possible to realize high degrees of load characteristics and storage characteristics of the non-aqueous electrolyte secondary battery at the same time by adjusting the positive electrode as described above in (1), (2), or (3) is not clear, the reason is presumed as follows. It is thought that in an electrode in which the interface resistance between a current collector and a mixture layer is sufficiently large compared with the resistance of the mixture layer (i.e., $Rs/(\rho v \times d)$ is sufficiently larger than 1) or the interface resistance is sufficiently small compared with the resistance of the mixture layer (i.e., $Rs/(\rho v \times d)$ is sufficiently smaller than 1), a conductive assistant contained in the mixture layer of the electrode is not efficiently functioning, whereas in an electrode in which the relationship between the interface resistance between a current collector and a mixture layer and the resistance of the mixture layer is within a certain range (for example, $Rs/(\rho v \times d)$ is close to 1), electrons are more efficiently conducted to the current collector by the effect of a conductive assistant contained in the mixture layer of the electrode. It is presumed that, accordingly, it is possible to improve load characteristics of a battery without impairing its storage characteristics by adjusting the value of $Rs/(\rho v \times d)$ so as to fall within a specific range.

Essentially, the closer the value of $Rs/(\rho v \times d)$ is to 1.0, the better, but it was found that even if the value of $Rs/(\rho v \times d)$ is away from 1.0 to some extent, it is possible to obtain an effect of realizing higher degrees of load characteristics and storage characteristics of the non-aqueous electrolyte secondary battery at the same time compared with a case where the value of Rs/($\rho$v$\times$d) is further away from 1.0, and the thicker the positive-electrode mixture layer is, the further the value of Rs/($\rho$v$\times$d) can be set away from 1.0.

In the case (1) described above, Rs is actually 0.003 $\Omega$cm$^2$ or more, and the manufacture is facilitated when Rs is 0.005 $\Omega$cm$^2$ or more. In the case (1), Rs is preferably 1.2 $\Omega$cm$^2$ or less, more preferably 0.8 $\Omega$cm$^2$ or less, and further preferably 0.5 $\Omega$cm$^2$ or less. In the case (1), pv is preferably 0.5 $\Omega$cm or more, more preferably 1.0 $\Omega$cm or more, and further preferably 1.5 $\Omega$cm or more. Also, pv is preferably 200 $\Omega$cm or less, more preferably 140 $\Omega$cm or less, further preferably 90 $\Omega$cm or less, and particularly preferably 70 $\Omega$cm or less.

In the case (2) described above, Rs is actually 0.003 $\Omega$cm$^2$ or more, and the manufacture is facilitated when Rs is 0.005 $\Omega$cm$^2$ or more, and further facilitated when Rs is 0.008 $\Omega$cm$^2$ or more. In the case (2), Rs is preferably 1.4 $\Omega$cm$^2$ or less, more preferably 0.9 $\Omega$cm$^2$ or less, further preferably 0.6 $\Omega$cm$^2$ or less, and particularly preferably 0.4 $\Omega$cm$^2$ or less. In the case (2), pv is preferably 0.4 $\Omega$cm or more, more preferably 0.9 $\Omega$cm or more, and further preferably 1.4 $\Omega$cm or more. Also, pv is preferably 200 $\Omega$cm or less, more preferably 140 $\Omega$cm or less, further preferably 90 $\Omega$cm or less, and particularly preferably 70 $\Omega$cm or less.

In the case (3) described above, Rs is actually 0.003 $\Omega$cm$^2$ or more, and the manufacture is facilitated when Rs is 0.005 $\Omega$cm$^2$ or more, and further facilitated when Rs is 0.008 $\Omega$cm$^2$ or more. In the case (3), Rs is preferably 1.6 $\Omega$cm$^2$ or less, more preferably 1.0 $\Omega$cm$^2$ or less, further preferably 0.7 $\Omega$cm$^2$ or less, and particularly preferably 0.5 $\Omega$cm$^2$ or less. In the case (3), pv is preferably 0.4 $\Omega$cm or more, more preferably 0.9 $\Omega$cm or more, and further preferably 1.4 $\Omega$cm or more. Also, pv is preferably 200 $\Omega$cm or less, more preferably 140 $\Omega$cm or less, further preferably 90 $\Omega$cm or less, and particularly preferably 70 $\Omega$cm or less.

In the case (1), the thickness of the positive-electrode mixture layer is set to 35 $\mu$m or more because, if the positive-electrode mixture layer is as thin as less than 35 $\mu$m, the battery tends to satisfy desired degrees of load characteristics and storage characteristics at the same time.

In the case (3), the thickness of the positive-electrode mixture layer is set to 80 $\mu$m or less because, if the thickness of the positive-electrode mixture layer exceeds 80 $\mu$m, it is difficult to adjust the value of Rs/($\rho$v$\times$d) in such a manner that the battery can have high degrees of load characteristics and storage characteristics at the same time. Also, the positive electrode according to the present invention is preferably manufactured by applying a positive-electrode mixture containing composition obtained by dispersing the positive-electrode active material and the conductive assistant in a solvent, to the current collector as described later, and it is not easy to form the positive-electrode mixture layer with a thickness larger than 80 $\mu$m while adjusting the value of Rs/($\rho$v$\times$d) by using this manufacturing method.

Note that the thickness of the positive-electrode mixture layer referred to in the present specification means the thickness of the positive-electrode mixture layer on one surface of the current collector as described above. In the case where the positive electrode includes an undercoat layer, which will be described later, the thickness of the positive-electrode mixture layer means the sum of the thickness of the undercoat layer formed on the current collector and the thickness of the positive-electrode mixture layer formed on the undercoat layer.

The thickness of the positive-electrode mixture layer referred to in the present specification means an average value (number average value) of thicknesses measured at arbitrarily selected 10 points on the positive-electrode mixture layer using an SEM scale in a field of view in which a cross section of the positive electrode is magnified at 1000$\times$ magnification using a scanning electron microscope (SEM).

Also, Rs and pv of the positive electrode referred to in the present specification mean values determined using the following method. The thickness of the positive-electrode mixture layer is determined using the above-described method, and the thickness of the current collector is also determined using the same method. Then, the thickness ($\mu$m) and resistivity (SZcm) of the current collector in the positive electrode and the thickness ($\mu$m) of the positive-electrode mixture layer are input to an electrode resistance measurement system "RM2610 (product name)" manufactured by Hioki E.E. Corporation, thereafter the positive electrode, which is the measurement sample, is set in the system, and measurement is started by lowering a probe. Thus, the interface resistance Rs ($\Omega$cm$^2$) between the positive-electrode mixture layer and the current collector and the volume resistivity pv ($\Omega$cm) of the positive-electrode mixture layer are determined. In the measurement, a measurement speed is set to Normal, a voltage range is set to 0.5 V, and a maximum current value with which a voltage V1 calculated by software of the system becomes 0.1V or less is selected from 50 mA, 10 mA, 1 mA, 100 $\mu$A, and 10 $\mu$A.

Note that a known resistivity determined by the composition of the positive-electrode current collector that is used is used as the resistivity (SZcm) of the current collector to be input to the system. Also, element analysis is performed with respect to the current collector obtained from a portion of the positive electrode taken out from the battery to identify the composition, and a known resistivity is used. Each measurement described above is carried out after taking out the positive electrode from an exterior body of the non-aqueous electrolyte secondary battery in a discharged state, and thereafter washing the positive electrode with diethyl carbonate a plurality of times.

Also, Rs/($\rho$v$\times$d) of the positive electrode referred to in the present specification means a value obtained by measuring Rs and pv at arbitrarily selected 15 points on a single measurement sample using the above-described method, calculating Rs/($\rho$v$\times$d) for each point, excluding, from the calculated values of Rs/($\rho$v$\times$d), five values from the largest value and five values from the smallest value, and calculating an average value (number average value) of the remaining five values.

As the current collector in the positive electrode, it is possible to use a foil, a punched metal, a mesh, an expanded metal, or a foamed metal made of aluminum, stainless steel, or the like, a carbon sheet, or the like. The thickness of the current collector is preferably 5 to 30 μm.

The positive electrode can be obtained by preparing a positive-electrode mixture containing composition, which is a slurry or a paste, by dispersing a positive-electrode mixture that contains the positive-electrode active material and the conductive assistant, and further contains the binder or the like in an organic solvent such as N-methyl-2-pyrrolidone (NMP) (the binder may be dissolved in the solvent), applying the prepared composition to one surface or both surfaces of the current collector, drying the applied composition, and performing press processing such as calender processing as necessary, for example.

Note that the value of Rs/(ρv×d) is adjusted to a value in accordance with the thickness of the positive-electrode mixture layer while the positive electrode is manufactured as described above. When the positive-electrode mixture containing composition is rapidly dried after applied to the current collector, the conductive assistant contained in the applied film of the positive-electrode mixture containing composition usually moves, and the proportion of the content of the conductive assistant tends to be higher at the surface of the formed positive-electrode mixture layer (surface on the side opposite to the current collector) than in the other portion of the positive-electrode mixture layer, and the value of Rs/(ρv×d) tends to be away from and larger than 1.0 due to this phenomenon. This phenomenon is noticeable particularly when the positive-electrode mixture layer is thick. Therefore, by reducing the variation in the concentration of the conductive assistant in the positive-electrode mixture layer, which is generated by the movement of the conductive assistant in the applied film of the positive-electrode mixture containing composition, as far as possible, it is possible to adjust the value of Rs/(ρv×d) so as to fall within the above-described ranges in accordance with the thickness of the positive-electrode mixture layer.

Specifically, it is conceivable to use: a method of drying the applied film of the positive-electrode mixture containing composition at a constant temperature; a method of slowly drying the applied film by using a plurality of drying furnaces and gradually increasing the temperatures of the drying furnaces; a method of delaying drying of the surface portion by filling a drying furnace with a volatilized solvent; a method of delaying drying of the surface as far as possible by keeping the electrode from being exposed to blowing air to keep the temperature of the electrode uniform; a method of delaying drying of the surface as far as possible by blowing air from the side opposite to the surface on which the composition has been applied; a method of drying the applied film with radiant heat using electromagnetic waves such as infrared rays including far infrared rays and near infrared rays; or a method of directly applying heat from the side (foil side) on which the composition has not been applied by using a guide roller or a metal plate like a hotplate, for example. In particular, if a roll-to-roll method is adopted, it is easy to change the time it takes to dry the applied film by changing the length of a drying furnace (length of a path within the drying furnace) and an application speed. Also, the method of slowly drying the applied film by using a plurality of drying furnaces and gradually increasing the temperatures of the drying furnaces is effective to easily control the variation in the concentration of the conductive assistant in the positive-electrode mixture layer.

Also, it is preferable to increase the viscosity of the positive-electrode mixture containing composition, and with this method as well, it is possible to reduce the variation in the concentration of the conductive assistant in the positive-electrode mixture layer and adjust the value of Rs/(ρv×d) so as to fall within the above-described ranges in accordance with the thickness of the positive-electrode mixture layer. Also, if the concentration of solid contents (total concentration of all components other than the solvent) in the positive-electrode mixture containing composition is set to about 75 to 90 mass%, for example, it is possible to suppress movement of the conductive assistant and the binder toward the surface of the applied film of the positive-electrode mixture containing composition that has not been dried, while the applied film is dried, and therefore, it is preferable to set the concentration of solid contents so as to fall within the above range, although this depends on the type of the positive-electrode mixture. However, the method for adjusting Rs/(ρv×d) does not depend only on the concentration of solid contents.

Furthermore, it is possible to adjust the value of Rs/(ρv×d) so as to fall within the above-described ranges in accordance with the thickness of the positive-electrode mixture layer by forming an undercoat layer that contains a conductive assistant on a surface of the current collector in advance, and forming the positive-electrode mixture layer on the undercoat layer using the method described above (method in which the positive-electrode mixture containing composition is used).

In this case, the various examples of conductive assistants listed above as conductive assistants that may be contained in the positive-electrode mixture layer may be contained in the undercoat layer. The undercoat layer may be formed of the conductive assistant only, or may also contain a binder together with the conductive assistant. The various examples of binders listed above as binders that may be contained in the positive-electrode mixture layer may be contained in the undercoat layer.

The thickness of the undercoat layer is preferably 50 to 1000 nm. The content of the conductive assistant in the undercoat layer is 1 to 100 mass%, for example, and the content of the binder in the undercoat layer is 0 to 99 mass%, for example.

The undercoat layer can be formed by preparing an undercoat layer-forming composition by dispersing the conductive assistant and the binder or the like, which is used as necessary, in an organic solvent such as NMP (the binder may be dissolved in the solvent), applying the prepared composition to a surface of the current collector, and drying the applied composition. In the case of a positive electrode including the undercoat layer, the positive-electrode mixture layer can be formed by applying the positive-electrode mixture containing composition to the surface of the undercoat layer formed on the surface of the current collector, by using the method described above. It is also possible to simultaneously form the undercoat layer and the positive-electrode mixture layer by applying the positive-electrode mixture containing composition on (an applied film of) the undercoat layer-forming composition applied to a surface of the current collector, without drying the undercoat layer-forming composition, and then drying the compositions, and performing press processing as necessary.

The content of the positive-electrode active material in the positive-electrode mixture layer is preferably 90 to 99.3 mass%.

Also, the content of the conductive assistant in the positive-electrode mixture layer (in the case where the positive electrode includes the undercoat layer, including the amount of the conductive assistant contained in the undercoat layer) is preferably 0.2 mass% or more, more preferably 1.0 mass% or more, and further preferably 1.5 mass% or more. The content of the conductive assistant is preferably less than 9.5 mass%, more preferably less than 5.0 mass%, and further preferably less than 4.2 mass%. If the amount of the conductive assistant in the positive-electrode mixture layer is increased, the resistance value of the positive-electrode mixture layer can be reduced, and accordingly, the load characteristics of the battery tend to be improved, but the storage characteristics of the battery tend to deteriorate. However, in the positive electrode according to the present invention, the value of $Rs/(\rho v \times d)$ is adjusted so as to fall within the above-described ranges in accordance with the thickness of the positive-electrode mixture layer, and therefore, it is possible to improve the load characteristics of the battery while suppressing deterioration of the storage characteristics of the battery by limiting the amount of the conductive assistant in the positive-electrode mixture layer as described above.

The content of the binder in the positive-electrode mixture layer (in the case where the positive electrode includes the undercoat layer, including the amount of the binder contained in the undercoat layer) is preferably 0.5 to 3 mass%.

A lead body for electrically connecting the positive electrode to another member in the non-aqueous electrolyte secondary battery may be formed on the positive electrode using a conventional method, as necessary.

<Non-Aqueous Electrolyte Secondary Battery>

A non-aqueous electrolyte secondary battery according to the present invention includes a positive electrode, a negative electrode, a separator interposed between the positive electrode and the negative electrode, and a non-aqueous electrolyte, and the positive electrode is the positive electrode for a non-aqueous electrolyte secondary battery according to the present invention.

As the negative electrode, it is possible to use a negative electrode that includes a negative-electrode mixture layer containing a negative-electrode active material and a binder and further containing a conductive assistant or the like as necessary on one surface or both surfaces of a current collector. It is also possible to use, as the negative electrode, a foil made of metal such as Li or a Li alloy (for example, a Li-Al alloy) that serves as the negative-electrode active material, or a negative electrode obtained by attaching such a foil on one surface or both surfaces of a current collector. Furthermore, the battery may be assembled using an Al foil or an Al alloy foil as the negative electrode (negative electrode precursor), and a Li-Al alloy may be formed on the negative electrode by Li ions that move from the positive electrode to the negative electrode during charging.

As the negative-electrode active material contained in the negative electrode including the negative-electrode mixture layer, it is possible to use a conventionally known negative-electrode active material used in the negative electrode of a non-aqueous electrolyte secondary battery, or in other words, an active material that can absorb and desorb Li ions. Specific examples of such a negative-electrode active material include particles of carbon materials such as graphite (natural graphite, artificial graphite obtained by graphitizing easily graphitizable carbon such as pyrolytic carbon, MCMB, or carbon fiber at 2800°C or higher, etc.,), pyrolytic carbon, coke, glassy carbon, a sintered body of an organic polymer compound, mesocarbon microbeads, carbon fiber, activated carbon, soft carbon, and hard carbon; metals (Si, Sn, etc.,) that can form an alloy with lithium, and materials (alloy, oxide, etc.,) that contain these metals; and the like. These negative-electrode active materials may be used alone or in a combination of two or more in the negative electrode.

The various examples of binders listed above as binders that may be used in the positive-electrode mixture layer may be used as the binder in the negative-electrode mixture layer. In the case where the negative-electrode mixture layer contains a conductive assistant, the various examples of conductive assistants listed above as conductive assistants that may be used in the positive-electrode mixture layer may be used as the conductive assistant in the negative-electrode mixture layer.

The negative electrode including the negative-electrode mixture layer is manufactured by preparing a negative-electrode mixture containing composition, which is a paste or a slurry, by dispersing the negative-electrode active material, the binder, and the conductive assistant, which is used as necessary, in a solvent such as an organic solvent (e.g., NMP) or water (the binder may be dissolved in the solvent), applying the prepared composition to one surface or both surfaces of the current collector, drying the applied composition, and performing press processing such as calender processing as necessary, for example. However, the method for manufacturing the negative electrode is not limited to this method, and the negative electrode may be manufactured using another method.

A lead body for electrically connecting the negative electrode to another member in the non-aqueous electrolyte secondary battery may be formed on the negative electrode using a conventional method, as necessary.

The thickness of the negative-electrode mixture layer provided on one surface of the current collector is preferably 10 to 100 $\mu$m, for example. As for the composition of the negative-electrode mixture layer, the negative-electrode active material is preferably contained in an amount of 85 to 99 mass%, and the binder is preferably contained in an amount of 1 to 10 mass%, for example. In the case where the negative-electrode mixture layer contains a conductive assistant, the conductive assistant is preferably contained in an amount of 0.5 to 10 mass% in the negative-electrode mixture layer. In the case where the negative electrode is constituted by a Li foil or a Li alloy foil, the thickness of the foil is preferably 8 to 20 $\mu$m.

As the current collector in the negative electrode, it is possible to use a foil, a punched metal, a mesh, an expanded metal, or the like made of copper, a copper alloy, nickel, or a nickel alloy, and a copper foil is usually used. The thickness of the negative electrode current collector is preferably 5 to 30 $\mu$m, for example.

As the separator included in the non-aqueous electrolyte secondary battery, a separator that has a sufficient strength and is capable of retaining a large amount of non-aqueous electrolyte is preferable, and a microporous film made of a polyolefin such as polyethylene (PE) or polypropylene (PP) can be used. The microporous film constituting the separator may be made of only PE or PP, or may contain an ethylene-propylene copolymer, for example. It is also possible to use a laminate of a microporous film made of PE and a microporous film made of PP as the separator.

It is also possible to use a layered separator constituted by a porous layer mainly composed of a resin that has a melting point of 140°C or lower and a porous layer mainly composed of a resin that has a melting point of 150°C or higher or an inorganic filler for which a heat-resistant temperature is 150°C or higher. Here, the "melting point" means a melting temperature measured in accordance with Japanese Industrial Standard (JIS) K 7121 using a differential scanning calorimeter (DSC), and "heat-resistant temperature is 150°C or higher" means that deformation such as softening does not occur at least at 150°C.

The thickness of the separator (the separator constituted by a microporous film made of polyolefin or the layered separator) is more preferably 10 to 30 $\mu$m.

As the non-aqueous electrolyte of the non-aqueous electrolyte secondary battery, a non-aqueous liquid electrolyte (non-aqueous electrolyte solution) is usually used. As the non-aqueous electrolyte solution, an electrolyte solution obtained by dissolving an electrolyte salt such as a lithium salt in an organic solvent is used. There is no particular limitation on the organic solvent, and examples of the organic solvent include: chain esters such as dimethyl carbonate, diethyl carbonate, ethyl methyl carbonate, and methyl propyl carbonate; cyclic esters that have a high dielectric constant such as ethylene carbonate, propylene carbonate, butylene carbonate, and vinylene carbonate; and a solvent mixture of a chain ester and a cyclic ester. In particular, a solvent mixture that contains a chain ester as the main solvent and a cyclic ester is suitably used.

Examples of the electrolyte salt dissolved in an organic solvent to prepare the non-aqueous electrolyte solution include $LiPF_6$, $LiBF_4$, $LiAsF_6$, $LiSbFs$, $LiCFsSOs$, $LiC_4F_9SO_3$, $LiCF_3CO_2$, $Li_2C_2F_4(SO_3)_2$, $LiC_nF_{2n+1}SO_3$, where $n \geq 2$, $LiN(RfSO_2)(Rf'SO_2)$, $LiC(RfSO_2)_3$, and $LiN(RfOSO_2)_2$, where Rf and Rf' each represent a fluoroalkyl group. These may be used alone or in a combination of two or more. There is no particular limitation on the concentration of the electrolyte salt in the non-aqueous electrolyte solution, but the concentration of the electrolyte salt is preferably 0.3 mol/l or more, and more preferably 0.4 mol/l or more, and preferably 1.7 mol/l or less, and more preferably 1.5 mol/l or less.

As the non-aqueous electrolyte included in the non-aqueous electrolyte secondary battery, it is possible to use, other than the non-aqueous electrolyte solution described above, a gel electrolyte obtained by gelling the non-aqueous electrolyte solution using a gelling agent made of a polymer or the like, or a known solid electrolyte.

In the non-aqueous electrolyte secondary battery, the positive electrode and the negative electrode can be used in the form of a stacked electrode assembly obtained by stacking the positive electrode and the negative electrode with the separator interposed therebetween, or in the form of a wound electrode assembly obtained by winding the stacked electrode assembly.

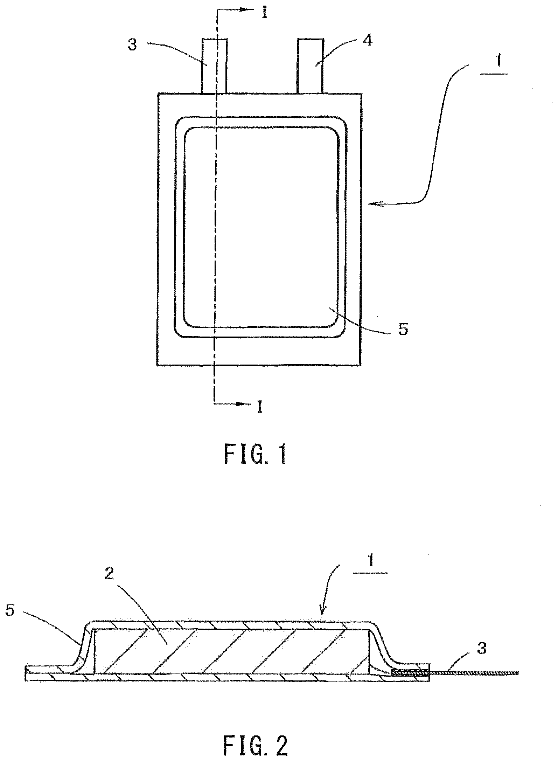

FIGS. 1 and 2 schematically show an example of the non-aqueous electrolyte secondary battery according to the present invention. FIG. 1 is a plan view of the non-aqueous electrolyte secondary battery, and FIG. 2 is a cross-sectional view taken along the line I-I shown in FIG. 1.

Anon-aqueous electrolyte secondary battery 1 shown in FIGS. 1 and 2 includes an electrode assembly 2 that is housed in a laminate film exterior body 5 that is formed using two metal laminate films, and the laminate film exterior body 5 is sealed by heat-sealing upper and lower metal laminate films at the outer peripheral portions thereof.

The electrode assembly 2 is a stacked electrode assembly or a wound electrode assembly obtained by stacking the positive electrode for a non-aqueous electrolyte secondary battery according to the present invention, a negative electrode, and a separator interposed between the positive electrode and the negative electrode, and a non-aqueous electrolyte is housed in the laminate film exterior body 5 together with the electrode assembly 2.

In FIG. 2, layers that constitute the laminate film exterior body 5 and the structural elements (the positive electrode, the negative electrode, and the separator) that constitute the electrode assembly 2 are not illustrated in order to avoid a complex drawing.

The positive electrode of the electrode assembly 2 is connected to a positive-electrode external terminal 3 in the battery 1. Also, although not shown in the diagram, the negative electrode of the electrode assembly 2 is also connected to a negative-electrode external terminal 4 in the battery 1. One end of the positive-electrode external terminal 3 and one end of the negative-electrode external terminal 4 are provided outside the laminate film exterior body 5 so that the positive-electrode external terminal 3 and the negative-electrode external terminal 4 can be connected to an external device or the like.

The non-aqueous electrolyte secondary battery is manufactured by housing the electrode assembly such as a stacked electrode assembly or a wound electrode assembly in the exterior body, pouring the non-aqueous electrolyte into the exterior body to immerse the electrode assembly in the non-aqueous electrolyte, and thereafter sealing the opening of the exterior body, for example. As the exterior body, it is possible to use an exterior can made of steel, aluminum, or an aluminum alloy, or an exterior body formed using a laminate film on which metal is deposited, for example. Specific examples of a battery including an exterior can include: a flat-shaped (including coin-shaped and button-shaped) battery including a battery case that is sealed by crimping the exterior can and a sealing plate via a gasket or by welding the exterior can and the sealing plate; and a tubular battery having a bottomed tubular shape (cylindrical shape, rectangular cylindrical shape, etc.,) that is sealed by providing a lid on the opening of the exterior can and crimping the exterior can and the lid via a gasket or welding the exterior can and the lid.

<Method for Inspecting Positive Electrode for Non-Aqueous Electrolyte Secondary Battery>

The value of $Rs/(\rho v \times d)$ required for the positive electrode for a non-aqueous electrolyte secondary battery serves as an index of the load characteristics and storage characteristics of a non-aqueous electrolyte secondary battery including the positive electrode. Therefore, whether or not the positive electrode for a non-aqueous electrolyte secondary battery is suitable to manufacture, for example, the non-aqueous electrolyte secondary battery according to the present invention can be determined using an inspection method of the present invention that includes: a step of measuring the interface resistance Rs ($\Omega cm^2$) between the positive-electrode mixture layer and the current collector, the volume resistivity pv (SZcm) of the positive-electrode mixture layer, and the thickness d (cm) of the positive-electrode mixture layer, and calculating the value of $Rs/(\rho v \times d)$; and a step of selecting a non-aqueous electrolyte secondary battery to which the positive electrode for a non-aqueous electrolyte secondary battery is to be applied, based on the value of $Rs/(\rho v \times d)$. Note that even if the value of $Rs/(\rho v \times d)$ does not satisfy any of (1) to (3) described above, for example, and it is determined that the positive electrode cannot be used to manufacture the non-aqueous electrolyte secondary battery according to the present invention through the inspection method of the present invention, the positive electrode can be used in a battery for which a high degree of load characteristics is not required, and accordingly, the positive electrode can be used to manufacture such a battery.

Examples

The following describes the present invention in detail based on examples. However, the following examples do not limit the present invention.

Example 1

<Manufacture of Positive Electrode>

A positive-electrode mixture containing slurry (concentration of solid contents other than the solvent was 75 mass%) was prepared by mixing $Li_{1.01}Ni_{0.5}Co_{0.2}Mn_{0.3}O_2$ (positive-electrode active material), acetylene black (conductive assistant), and PVDF (binder) at a mass ratio of 94:4:2 and dispersing the mixture in NMP.

The positive-electrode mixture containing slurry was intermittently applied to one surface of an aluminum foil with a thickness of 15 $\mu$m, which was used as a current collector, and dried by using a drying furnace including three dryers and setting the most upstream dryer 1 to 110°C, an intermediate dryer 2 to 105°C, and the most downstream dryer 3 to 110°C, to form a positive-electrode mixture layer. A positive-electrode mixture layer was also formed on the other surface of the aluminum foil in the same manner, and thus the positive-electrode mixture layers were formed on both surfaces of the aluminum foil. After drying, calender processing was performed to adjust the entire thickness to 95 $\mu$m by adjusting the thicknesses of the positive-electrode mixture layers. The resultant laminate was cut to obtain an elongated positive electrode. Furthermore, an aluminum lead piece for taking out a current was welded to an exposed portion of the aluminum foil, and thus a positive electrode provided with a lead was obtained. The thickness of the positive-electrode mixture layer provided on each surface of the current collector in the obtained positive electrode was 40 $\mu$m.

<Manufacture of Negative Electrode>

A negative-electrode mixture containing paste was prepared by mixing graphite (negative-electrode active material), CMC (binder), and SBR (binder) at a mass ratio of 96:2:2, and dispersing the mixture in water.
The negative-electrode mixture containing paste was intermittently applied to both surfaces of a copper foil with a thickness of 10 $\mu$m, which was used as a current collector, and dried, and thereafter calender processing was performed to adjust the entire thickness to 102 $\mu$m by adjusting the thicknesses of negative-electrode mixture layers. The resultant laminate was cut to obtain an elongated negative electrode. Furthermore, a nickel lead piece for taking out a current was welded to an exposed portion of the copper foil, and thus a negative electrode provided with a lead was obtained. The thickness of the negative-electrode mixture layer provided on each surface of the current collector in the obtained negative electrode was 46 $\mu$m.

<Preparation of Non-Aqueous Electrolyte Solution>

A non-aqueous electrolyte solution was prepared by dissolving $LiPF_6$ at a concentration of 1.0 mol/l in a solvent obtained by mixing ethylene carbonate and diethyl carbonate at a volume ratio of 3:7, and further adding vinylene carbonate in an amount of 2 mass%.

<Assembly of Non-Aqueous Electrolyte Secondary Battery>

The positive electrode and the negative electrode were stacked on each other via a separator (microporous film made of PE with a thickness of 16 um and a porosity of 40%), and the stack was spirally wound to obtain a wound electrode assembly. The wound electrode assembly and the non-aqueous electrolyte solution were housed in an aluminum laminate film exterior body and the exterior body was sealed, and thus a non-aqueous electrolyte secondary battery was manufactured.

Comparative Example 1

A positive-electrode mixture containing slurry was prepared in the same manner as in Example 1, except that the positive-electrode active material, the conductive assistant, and the binder were mixed at a mass ratio of 93:5:2 and the concentration of solid contents in the positive-electrode mixture containing slurry was changed to 72 mass%. A positive electrode was manufactured in the same manner as in Example 1, except that the positive-electrode mixture containing slurry was used, and a non-aqueous electrolyte secondary battery was manufactured in the same manner as in Example 1, except that the positive electrode was used.

Comparative Example 2

A positive electrode was manufactured in the same manner as in Example 1, except that the applied film of the positive-electrode mixture containing slurry was dried by using the drying furnace including three dryers and setting the most upstream dryer 1 to 105°C, the intermediate dryer 2 to 110°C, and the most downstream dryer 3 to 110°C. A non-aqueous electrolyte secondary battery was manufactured in the same manner as in Example 1, except that the positive electrode was used.
The non-aqueous electrolyte secondary batteries of Example 1 and Comparative Examples 1 and 2 were evaluated as follows.

[Evaluation of Low-Temperature Load Characteristics]

The batteries of Example 1 and Comparative Examples 1 and 2 were subjected to constant current charging at a current value of 0.5 C until the voltage reached 4.2 V, and subsequently subjected to constant voltage charging at a voltage of 4.2 V until the current value reached 0.02 C. Thereafter, each battery was subjected to constant current discharging at normal temperature (25°C) at a current value of 1 C until the voltage reached 2.75 V to measure an initial discharge capacity.

Each discharged battery was charged using the same charging method as that described above, and then placed in a thermostatic chamber adjusted to 0°C, and after the temperature of the battery decreased, the battery was subjected to constant current discharging at a constant current of 1 C until the voltage reached 2 V to measure a discharge capacity (low-temperature 1 C discharge capacity). Low-temperature load characteristics of each battery were evaluated by dividing the low-temperature 1 C discharge capacity by the initial discharge capacity.

[Evaluation of 85°C Storage Characteristics]

In each example and each comparative example, five batteries were prepared, and subjected to constant current charging and constant voltage charging under the same conditions as those adopted when the initial discharge capacity was measured in the evaluation of low-temperature load characteristics. Each charged battery was sandwiched between two flat plates having areas large enough to cover the entirety of a flat portion of the exterior body, and the thickness of the battery (thickness before storage) was measured using a gauge in a state where a force of 0.5 N/cm$^2$ was applied.

Each battery for which the thickness before storage was measured was stored in a thermostatic chamber adjusted to 85°C for 24 hours, and then taken out and cooled at room temperature (25°C) for 3 hours, and thereafter the thickness of the battery (thickness after storage) was measured using the same method as that used when the thickness before storage was measured.

A thickness change percentage indicating a change in the thickness of the battery before and after storage was calculated using the following formula, and an average value was calculated for the five batteries to evaluate the storage characteristics of the batteries.

$$\text{Thickness change percentage } (\%) = 100 \times (\text{thickness after storage} - \text{thickness}$$
$$\text{before storage})/\text{thickness before storage}$$

Results of the above-described evaluation are shown in Table 1 together with the thickness of the positive-electrode mixture layer in the positive electrode, Rs, ρv, and Rs/(ρv×d). In Table 1, evaluation results of the low-temperature load characteristics and evaluation results of the 85°C storage characteristics are each shown as a relative value when the value of Example 1 is taken as 100.

Table 1

| | Positive electrode | | | | Non-aqueous electrolyte secondary battery | |
|---|---|---|---|---|---|---|
| | Positive-electrode mixture layer thickness (μm) | ρv (Ωcm) | Rs (Ωcm$^2$) | Rs/ (ρv×d) | Low-temperature load characteristics | 85°C storage characteristics |
| Ex. 1 | 40 | 1.38 | 0.00578 | 1.05 | 100 | 100 |
| Com. Ex. 1 | 40 | 1.22 | 0.00625 | 1.28 | 100 | 112 |
| Com. Ex. 2 | 40 | 1.40 | 0.00738 | 1.31 | 92 | 101 |

As shown in Table 1, the battery of Example 1 including the positive electrode in which the thickness of the positive-electrode mixture layer was 35 μm or more and less than 58 μm and the value of Rs/(ρv×d) was appropriate achieved good results in both evaluation of the low-temperature load characteristics and evaluation of the 85°C storage characteristics compared with the batteries of Comparative Examples 1 and 2 including the positive electrodes for which the value of Rs/(ρv×d) was inappropriate, and the battery of Example 1 had high degrees of load characteristics and storage characteristics at the same time.

Example 2

A positive electrode was manufactured in the same manner as in Example 1, except that the thickness of the positive-electrode mixture layer provided on each surface of the current collector in the positive electrode was changed to 46 $\mu$m.

A negative-electrode mixture containing paste was prepared by mixing a composite material obtained by covering surfaces of SiO with a carbon material (negative-electrode active material, the amount of the carbon material was 10 parts by mass with respect 100 parts by mass of SiO), graphite (negative-electrode active material), CMC (binder), and SBR (binder) at a mass ratio of 3:93:2:2, and dispersing the mixture in water. A negative electrode including a negative-electrode mixture layer with a thickness of 46 $\mu$m on each surface of a current collector was manufactured in the same manner as Example 1, except that the negative-electrode mixture containing paste was used, and a non-aqueous electrolyte secondary battery was manufactured in the same manner as in Example 1, except that the positive electrode described above and the negative electrode were used.

Comparative Example 3

A positive electrode was manufactured in the same manner as in Example 2, except that the same positive-electrode mixture containing slurry as that used in Comparative Example 1 was used, and a non-aqueous electrolyte secondary battery was manufactured in the same manner as in Example 2, except that the positive electrode was used.

Comparative Example 4

A positive electrode was manufactured in the same manner as in Example 2, except that the applied film of the positive-electrode mixture containing slurry was dried under the same conditions as those adopted in Comparative Example 2, and a non-aqueous electrolyte secondary battery was manufactured in the same manner as in Example 2, except that the positive electrode was used.

The low-temperature load characteristics and the 85°C storage characteristics of the non-aqueous electrolyte secondary batteries of Example 2 and Comparative Examples 3 and 4 were evaluated using the same methods as those used to evaluate the battery of Example 1. Results of the above-described evaluation are shown in Table 2 together with the thickness of the positive-electrode mixture layer in the positive electrode, Rs, pv, and Rs/(ρv×d). In Table 2, evaluation results of the low-temperature load characteristics and evaluation results of the 85°C storage characteristics are each shown as a relative value when the value of Example 2 is taken as 100.

Table 2

| | Positive electrode | | | | Non-aqueous electrolyte secondary battery | |
|---|---|---|---|---|---|---|
| | Positive-electrode mixture layer thickness ($\mu$m) | $\rho v$ ($\Omega$cm) | Rs ($\Omega$cm$^2$) | Rs/ ($\rho v \times d$) | Low-temperature load characteristics | 85°C storage characteristics |
| Ex. 2 | 46 | 1.42 | 0.0067 | 1.03 | 100 | 100 |
| Com. Ex. 3 | 46 | 1.16 | 0.0069 | 1.29 | 100 | 116 |
| Com. Ex. 4 | 46 | 1.44 | 0.0085 | 1.28 | 94 | 101 |

As shown in Table 2, the battery of Example 2 including the positive electrode in which the thickness of the positive-electrode mixture layer was 35 $\mu$m or more and less than 58 $\mu$m and the value of Rs/(ρv×d) was appropriate achieved good results in both evaluation of the low-temperature load characteristics and evaluation of the 85°C storage characteristics compared with the batteries of Comparative Examples 3 and 4 including the positive electrodes for which the value of Rs/(ρv×d) was inappropriate, and the battery of Example 2 had high degrees of load characteristics and storage characteristics at the same time.

Example 3

<Manufacture of Positive Electrode>

A positive-electrode mixture containing slurry (concentration of solid contents other than the solvent was 80 mass%) was prepared by mixing $Li_{1.01}Co_{0.98}Mg_{0.01}Al_{0.01}O_2$ (positive-electrode active material), acetylene black (conductive assistant), and PVDF (binder) at a mass ratio of 97:1.9:1.1, and dispersing the mixture in NMP.

The positive-electrode mixture containing slurry was intermittently applied to one surface of an aluminum foil with a thickness of 10 $\mu$m, which was used as a current collector, and dried by using the drying furnace including three dryers and setting the most upstream dryer 1 to 110°C, the intermediate dryer 2 to 105°C, and the most downstream dryer 3 to 110°C, to form a positive-electrode mixture layer. A positive-electrode mixture layer was also formed on the other surface of the aluminum foil in the same manner, and thus the positive-electrode mixture layers were formed on both surfaces of the aluminum foil. After drying, calender processing was performed to adjust the entire thickness to 116 $\mu$m by adjusting the thicknesses of the positive-electrode mixture layers. The resultant laminate was cut to obtain an elongated positive electrode. Furthermore, an aluminum lead piece for taking out a current was welded to an exposed portion of the aluminum foil, and thus a positive electrode provided with a lead was obtained. The thickness of the positive-electrode mixture layer provided on each surface of the current collector in the obtained positive electrode was 53 $\mu$m.

<Manufacture of Negative Electrode>

A negative-electrode mixture containing paste was prepared by mixing graphite (negative-electrode active material), CMC (binder), and SBR (binder) at a mass ratio of 96:2:2, and dispersing the mixture in water.

The negative-electrode mixture containing paste was intermittently applied to both surfaces of a copper foil with a thickness of 10 $\mu$m, which was used as a current collector, and dried, and thereafter calender processing was performed to adjust the entire thickness to 148 $\mu$m by adjusting the thicknesses of negative-electrode mixture layers. The resultant laminate was cut to obtain an elongated negative electrode. Furthermore, a nickel lead piece for taking out a current was welded to an exposed portion of the copper foil, and thus a negative electrode provided with a lead was obtained. The thickness of the negative-electrode mixture layer provided on each surface of the current collector in the obtained negative electrode was 69 $\mu$m.

A non-aqueous electrolyte secondary battery was manufactured in the same manner as in Example 1, except that the above-described positive electrode and the negative electrode were used.

Example 4

A positive electrode was manufactured in the same manner as in Example 3, except that the applied film of the positive-electrode mixture containing slurry was dried by using the drying furnace including three dryers and setting the most upstream dryer 1 to 110°C, the intermediate dryer 2 to 110°C, and the most downstream dryer 3 to 110°C. A non-aqueous electrolyte secondary battery was manufactured in the same manner as in Example 3, except that the positive electrode was used.

Comparative Example 5

A positive-electrode mixture containing slurry was prepared in the same manner as in Example 3, except that a positive-electrode mixture obtained by mixing the positive-electrode active material, the conductive assistant, and the binder at a mass ratio of 96.5:2.4:1.1 was used and the concentration of solid contents was changed to 78 mass%, and a positive electrode was manufactured in the same manner as in Example 4, except that the positive-electrode mixture containing slurry was used. A non-aqueous electrolyte secondary battery was manufactured in the same manner as in Example 3, except that the positive electrode was used.

Comparative Example 6

A positive electrode was manufactured in the same manner as in Example 3, except that the applied film of the positive-electrode mixture containing slurry was dried by using the drying furnace including three dryers and setting the most upstream dryer 1 to 105°C, the intermediate dryer 2 to 110°C, and the most downstream dryer 3 to 110°C. A non-aqueous electrolyte secondary battery was manufactured in the same manner as in Example 3, except that the positive electrode was used.

The low-temperature load characteristics and the 85°C storage characteristics of the non-aqueous electrolyte secondary batteries of Examples 3 and 4 and Comparative Examples 5 and 6 were evaluated using the same methods as those used to evaluate the battery of Example 1, except that the final voltage in charging was changed to 4.4 V Results of the above-described evaluation are shown in Table 3 together with the thickness of the positive-electrode mixture layer in the positive electrode, Rs, pv, and Rs/(pv×d). In Table 3, evaluation results of the low-temperature load characteristics and evaluation results of the 85°C storage characteristics are each shown as a relative value when the value of Example 3 is taken as 100.

Table 3

| | | Positive electrode | | | Non-aqueous electrolyte secondary battery | |
|---|---|---|---|---|---|---|
| | | Positive-electrode mixture layer thickness (μm) | ρv (Ωcm) | Rs (Ωcm$^2$) | Rs/ (ρv×d) | Low-temperature load characteristics | 85°C storage characteristics |
| Ex. 3 | | 53 | 65.2 | 0.35 | 1.01 | 100 | 100 |
| Ex. 4 | | 53 | 62 | 0.368 | 1.12 | 97 | 101 |
| Com. Ex. 5 | | 53 | 62.1 | 0.51 | 1.55 | 100 | 126 |
| Com. Ex. 6 | | 53 | 63 | 0.525 | 1.57 | 96 | 103 |

As shown in Table 3, the batteries of Examples 3 and 4 including the positive electrodes in which the thickness of the positive-electrode mixture layer was 35 μm or more and less than 58 μm and the value of Rs/(pv×d) was appropriate achieved good results in both evaluation of the low-temperature load characteristics and evaluation of the 85°C storage characteristics compared with the batteries of Comparative Examples 5 and 6 including the positive electrodes for which the value of Rs/(pv×d) was inappropriate, and the batteries of Examples 3 and 4 had high degrees of load characteristics and storage characteristics at the same time.

Example 5

A non-aqueous electrolyte secondary battery was manufactured in the same manner as in Example 1, except that the negative electrode was changed to an Al foil with a thickness of 80 um, which served as a precursor of the negative electrode. In the battery of Example 5, Li ions move from the positive electrode to Al on the negative electrode side when the battery is initially charged, and form a negative electrode that contains a Li-Al alloy.

Comparative Example 7

A non-aqueous electrolyte secondary battery was manufactured in the same manner as in Example 5, except that the same positive electrode as that manufactured in Comparative Example 1 was used.

Comparative Example 8

A non-aqueous electrolyte secondary battery was manufactured in the same manner as in Example 5, except that the same positive electrode as that manufactured in Comparative Example 2 was used.
The low-temperature load characteristics and the 85°C storage characteristics of the non-aqueous electrolyte secondary batteries of Example 5 and Comparative Examples 7 and 8 were evaluated using the same methods as those used to evaluate the battery of Example 1. Results of the above-described evaluation are shown in Table 4 together with the thickness of the positive-electrode mixture layer in the positive electrode, Rs, pv, and Rs/(pv×d). In Table 4, evaluation results of the low-temperature load characteristics and evaluation results of the 85°C storage characteristics are each shown as a relative value when the value of Example 5 is taken as 100.

Table 4

| | | Positive electrode | | | | Non-aqueous electrolyte secondary battery | |
|---|---|---|---|---|---|---|---|
| | | Positive-electrode mixture layer thickness ($\mu$m) | $\rho v$ ($\Omega$cm) | Rs ($\Omega$cm$^2$) | Rs/ ($\rho v \times d$) | Low-temperature load characteristics | 85°C storage characteristics |
| | Ex. 5 | 40 | 1.38 | 0.0058 | 1.05 | 100 | 100 |
| | Com. Ex. 7 | 40 | 1.14 | 0.00585 | 1.28 | 100 | 139 |
| | Com. Ex. 8 | 40 | 1.36 | 0.0071 | 1.31 | 83 | 99 |

As shown in Table 4, the battery of Example 5 including the positive electrode in which the thickness of the positive-electrode mixture layer was 35 $\mu$m or more and less than 58 $\mu$m and the value of Rs/($\rho v \times d$) was appropriate achieved good results in both evaluation of the low-temperature load characteristics and evaluation of the 85°C storage characteristics compared with the batteries of Comparative Examples 7 and 8 including the positive electrodes for which the value of Rs/($\rho v \times d$) was inappropriate, and the battery of Example 5 had high degrees of load characteristics and storage characteristics at the same time.

Example 6

<Manufacture of Positive Electrode>

A positive-electrode mixture containing slurry (concentration of solid contents other than the solvent was 79 mass%) was prepared by mixing a positive-electrode active material, which was a mixture of $Li_{1.01}Co_{0.98}Mg_{0.01}Al_{0.01}O_2$ and $Li_{1.01}Ni_{0.86}Co_{0.15}Al_{0.04}O_2$ mixed at a mass ratio of 85:15, acetylene black (conductive assistant), graphite (conductive assistant), and PVDF (binder) at a mass ratio of 97.3:1.2:0.3:1.2, and dispersing the mixture in NMP.

The positive-electrode mixture containing slurry was intermittently applied to one surface of an aluminum foil with a thickness of 15 $\mu$m, which was used as a current collector, and dried by using the drying furnace including three dryers and setting the most upstream dryer 1 to 120°C, the intermediate dryer 2 to 110°C, and the most downstream dryer 3 to 120°C, to form a positive-electrode mixture layer. A positive-electrode mixture layer was also formed on the other surface of the aluminum foil in the same manner, and thus the positive-electrode mixture layers were formed on both surfaces of the aluminum foil. After drying, calender processing was performed to adjust the entire thickness to 135 $\mu$m by adjusting the thicknesses of the positive-electrode mixture layers. The resultant laminate was cut to obtain an elongated positive electrode. Furthermore, an aluminum lead piece for taking out a current was welded to an exposed portion of the aluminum foil, and thus a positive electrode provided with a lead was obtained. The thickness of the positive-electrode mixture layer provided on each surface of the current collector in the obtained positive electrode was 60 $\mu$m.

<Manufacture of Negative Electrode>

A negative-electrode mixture containing paste prepared in the same manner as in Example 1 was intermittently applied to both surfaces of a copper foil with a thickness of 10 $\mu$m, which was used as a current collector, and dried, and thereafter calender processing was performed to adjust the entire thickness to 146 $\mu$m by adjusting the thicknesses of negative-electrode mixture layers. The resultant laminate was cut to obtain an elongated negative electrode. Furthermore, a nickel lead piece for taking out a current was welded to an exposed portion of the copper foil, and thus a negative electrode provided with a lead was obtained. The thickness of the negative-electrode mixture layer provided on each surface of the current collector in the obtained negative electrode was 68 $\mu$m.

A non-aqueous electrolyte secondary battery was manufactured in the same manner as in Example 1, except that the above-described positive electrode and the negative electrode were used.

Example 7

A positive electrode was manufactured in the same manner as in Example 6, except that the applied film of the positive-electrode mixture containing slurry was dried by using the drying furnace including three dryers and setting the most upstream dryer 1 to 115°C, the intermediate dryer 2 to 110°C, and the most downstream dryer 3 to 120°C and the thickness of the positive-electrode mixture layer provided on each surface of the current collector in the positive electrode was changed to 61 μm. A non-aqueous electrolyte secondary battery was manufactured in the same manner as in Example 6, except that the positive electrode was used.

Example 8

A positive electrode was manufactured in the same manner as in Example 6, except that the applied film of the positive-electrode mixture containing slurry was dried by using the drying furnace including three dryers and setting the most upstream dryer 1 to 110°C, the intermediate dryer 2 to 110°C, and the most downstream dryer 3 to 120°C and the thickness of the positive-electrode mixture layer provided on each surface of the current collector in the positive electrode was changed to 61 μm. A non-aqueous electrolyte secondary battery was manufactured in the same manner as in Example 6, except that the positive electrode was used.

Example 9

A positive electrode was manufactured in the same manner as in Example 6, except that the applied film of the positive-electrode mixture containing slurry was dried by using the drying furnace including three dryers and setting the most upstream dryer 1 to 110°C, the intermediate dryer 2 to 115°C, and the most downstream dryer 3 to 120°C and the thickness of the positive-electrode mixture layer provided on each surface of the current collector in the positive electrode was changed to 61 μm. A non-aqueous electrolyte secondary battery was manufactured in the same manner as in Example 6, except that the positive electrode was used.

Example 10

A positive electrode was manufactured in the same manner as in Example 6, except that the applied film of the positive-electrode mixture containing slurry was dried by using the drying furnace including three dryers and setting the most upstream dryer 1 to 105°C, the intermediate dryer 2 to 115°C, and the most downstream dryer 3 to 120°C and the thickness of the positive-electrode mixture layer provided on each surface of the current collector in the positive electrode was changed to 61 μm. A non-aqueous electrolyte secondary battery was manufactured in the same manner as in Example 6, except that the positive electrode was used.

Comparative Example 9

A positive electrode was manufactured in the same manner as in Example 6, except that the applied film of the positive-electrode mixture containing slurry was dried by using the drying furnace including three dryers and setting the most upstream dryer 1 to 105°C, the intermediate dryer 2 to 120°C, and the most downstream dryer 3 to 120°C. A non-aqueous electrolyte secondary battery was manufactured in the same manner as in Example 6, except that the positive electrode was used.

Comparative Example 10

A positive-electrode mixture containing slurry was prepared in the same manner as in Example 6, except that the mass ratio between the positive-electrode active material, acetylene black (conductive assistant), graphite (conductive assistant), and PVDF (binder) was changed to 96.8:1.7:0.3:1.2 and the concentration of solid contents other than the solvent was changed to 76 mass%. A positive electrode was manufactured in the same manner as in Example 6, except that the positive-electrode mixture containing slurry was used and the applied film of the positive-electrode mixture containing slurry was dried by using the drying furnace including three dryers and setting the most upstream dryer 1 to 105°C, the intermediate dryer 2 to 115°C, and the most downstream dryer 3 to 120°C. A non-aqueous electrolyte secondary battery was manufactured in the same manner as in Example 6, except that the positive electrode was used.

Example 11

An undercoat layer-forming composition prepared by using vapor-grown carbon fiber (conductive assistant) and chitosan (binder) at a mass ratio of 30:70 and dispersing these in NMP was applied to both surfaces of the same current collector (aluminum foil) as that used in Example 1, and dried to form an undercoat layer with a thickness of 0.5 μm on each surface of the current collector.

A positive electrode was manufactured in the same manner as in Example 6, except that the current collector on which the undercoat layers had been formed as described above was used and the applied film of the positive-electrode mixture containing slurry was dried by using the drying furnace including three dryers and setting the most upstream dryer 1 to 110°C, the intermediate dryer 2 to 115°C, and the most downstream dryer 3 to 120°C. Anon-aqueous electrolyte secondary battery was manufactured in the same manner as in Example 6, except that the positive electrode was used. Note that the positive-electrode mixture layers including the undercoat layers contained the positive-electrode active material in an amount of 97.25 mass%, the conductive assistant in an amount of 1.55 mass%, and the binder in an amount of 1.20 mass%.

Example 12

A positive electrode including undercoat layers was manufactured in the same manner as in Example 11, except that the applied film of the positive-electrode mixture containing slurry was dried by using the drying furnace including three dryers and setting the most upstream dryer 1 to 115°C, the intermediate dryer 2 to 110°C, and the most downstream dryer 3 to 120°C, and a non-aqueous electrolyte secondary battery was manufactured in the same manner as in Example 11, except that the positive electrode was used.

Example 13

A positive electrode including undercoat layers was manufactured in the same manner as in Example 11, except that the applied film of the positive-electrode mixture containing slurry was dried by using the drying furnace including three dryers and setting the most upstream dryer 1 to 120°C, the intermediate dryer 2 to 110°C, and the most downstream dryer 3 to 120°C, and a non-aqueous electrolyte secondary battery was manufactured in the same manner as in Example 11, except that the positive electrode was used.

Comparative Example 11

A positive electrode including undercoat layers was manufactured in the same manner as in Example 11, except that the applied film of the positive-electrode mixture containing slurry was dried by using the drying furnace including three dryers and setting the most upstream dryer 1 to 120°C, the intermediate dryer 2 to 115°C, and the most downstream dryer 3 to 120°C, and a non-aqueous electrolyte secondary battery was manufactured in the same manner as in Example 11, except that the positive electrode was used.

The low-temperature load characteristics and the 85°C storage characteristics of the non-aqueous electrolyte secondary batteries of Examples 6 to 13 and Comparative Examples 9 to 11 were evaluated using the same methods as those used to evaluate the battery of Example 1. Results of the above-described evaluation are shown in Table 5 together with the thickness of the positive-electrode mixture layer in the positive electrode, Rs, ρv, and Rs/(ρv×d). In Table 5, evaluation results of the low-temperature load characteristics and evaluation results of the 85°C storage characteristics are each shown as a relative value when the value of Example 6 is taken as 100.

Table 5

| | Positive electrode | | | | Non-aqueous electrolyte secondary battery | |
|---|---|---|---|---|---|---|
| | Positive-electrode mixture layer thickness ($\mu$m) | $\rho v$ ($\Omega$cm) | Rs ($\Omega$cm$^2$) | Rs/ ($\rho v \times$ d) | Low-temperature load characteristics | 85°C storage characteristics |
| Ex. 6 | 60 | 65 | 0.36 | 0.92 | 100 | 100 |
| Ex. 7 | 61 | 61 | 0.41 | 1.10 | 99 | 102 |
| Ex. 8 | 61 | 58 | 0.445 | 1.26 | 98 | 98 |
| Ex. 9 | 61 | 54 | 0.437 | 1.33 | 92 | 99 |
| Ex. 10 | 61 | 54 | 0.462 | 1.40 | 89 | 99 |
| Ex. 11 | 60 | 55 | 0.315 | 0.95 | 105 | 105 |
| Ex. 12 | 60 | 60 | 0.297 | 0.83 | 101 | 107 |
| Ex. 13 | 60 | 56 | 0.224 | 0.67 | 95 | 109 |
| Com.Ex. 9 | 60 | 52 | 0.52 | 1.67 | 82 | 101 |

(continued)

| | Positive electrode | | | | Non-aqueous electrolyte secondary battery | |
| --- | --- | --- | --- | --- | --- | --- |
| | Positive-electrode mixture layer thickness ($\mu$m) | $\rho v$ ($\Omega$cm) | Rs ($\Omega$cm$^2$) | Rs/ ($\rho v \times$ d) | Low-temperature load characteristics | 85°C storage characteristics |
| Com.Ex. 10 | 60 | 52 | 0.515 | 1.65 | 103 | 145 |
| Com.Ex. 11 | 60 | 57 | 0.160 | 0.47 | 85 | 108 |

As shown in Table 5, the batteries of Examples 6 to 13 including the positive electrodes in which the thickness of the positive-electrode mixture layer was 58 $\mu$m or more and less than 68 $\mu$m and the value of Rs/($\rho v \times$d) was appropriate achieved good results in both evaluation of the low-temperature load characteristics and evaluation of the 85°C storage characteristics compared with the batteries of Comparative Examples 9 to 11 including the positive electrodes for which the value of Rs/($\rho v \times$d) was inappropriate, and the batteries of Examples 6 to 13 had high degrees of load characteristics and storage characteristics at the same time.

Example 14

A positive electrode was manufactured in the same manner as in Example 6, except that the applied film of the positive-electrode mixture containing slurry was dried by using the drying furnace including three dryers and setting the most upstream dryer 1 to 115°C, the intermediate dryer 2 to 110°C, and the most downstream dryer 3 to 120°C and the thicknesses of the positive-electrode mixture layers were adjusted such that the positive electrode had an entire thickness of 145 $\mu$m. The thickness of the positive-electrode mixture layer provided on each surface of the current collector in the obtained positive electrode was 65 $\mu$m.

Also, a negative electrode was manufactured in the same manner as in Example 6, except that the thicknesses of the negative-electrode mixture layers were adjusted such that the negative electrode had an entire thickness of 154 $\mu$m. The thickness of the negative-electrode mixture layer provided on each surface of the current collector in the obtained negative electrode was 72 $\mu$m.

A non-aqueous electrolyte secondary battery was manufactured in the same manner as in Example 1, except that the above-described positive electrode and the negative electrode were used.

Example 15

A positive electrode was manufactured in the same manner as in Example 6, except that the applied film of the positive-electrode mixture containing slurry was dried using the drying furnace including three dryers and setting the most upstream dryer 1 to 110°C, the intermediate dryer 2 to 110°C, and the most downstream dryer 3 to 120°C and the thickness of the positive-electrode mixture layer provided on each surface of the current collector in the positive electrode was changed to 64 $\mu$m. A non-aqueous electrolyte secondary battery was manufactured in the same manner as in Example 14, except that the positive electrode was used.

Example 16

A positive electrode was manufactured in the same manner as in Example 6, except that the applied film of the positive-electrode mixture containing slurry was dried by using the drying furnace including three dryers and setting the most upstream dryer 1 to 110°C, the intermediate dryer 2 to 115°C, and the most downstream dryer 3 to 120°C and the thickness of the positive-electrode mixture layer provided on each surface of the current collector in the positive electrode was changed to 64 $\mu$m. A non-aqueous electrolyte secondary battery was manufactured in the same manner as in Example 14, except that the positive electrode was used.

Example 17

A positive electrode was manufactured in the same manner as in Example 6, except that the applied film of the positive-electrode mixture containing slurry was dried by using the drying furnace including three dryers and setting the most upstream dryer 1 to 105°C, the intermediate dryer 2 to 115°C, and the most downstream dryer 3 to 120°C and the thickness of the positive-electrode mixture layer provided on each surface of the current collector in the positive electrode was changed to 64 μm. A non-aqueous electrolyte secondary battery was manufactured in the same manner as in Example 14, except that the positive electrode was used.

Example 18

A positive electrode was manufactured in the same manner as in Example 6, except that the applied film of the positive-electrode mixture containing slurry was dried by using the drying furnace including three dryers and setting the most upstream dryer 1 to 105°C, the intermediate dryer 2 to 110°C, and the most downstream dryer 3 to 120°C and the thickness of the positive-electrode mixture layer provided on each surface of the current collector in the positive electrode was changed to 64 μm. A non-aqueous electrolyte secondary battery was manufactured in the same manner as in Example 14, except that the positive electrode was used.

Comparative Example 12

A positive electrode was manufactured in the same manner as in Example 6, except that the applied film of the positive-electrode mixture containing slurry was dried by using the drying furnace including three dryers and setting the most upstream dryer 1 to 110°C, the intermediate dryer 2 to 120°C, and the most downstream dryer 3 to 120°C and the thickness of the positive-electrode mixture layer provided on each surface of the current collector in the positive electrode was changed to 64 μm. A non-aqueous electrolyte secondary battery was manufactured in the same manner as in Example 14, except that the positive electrode was used.

Comparative Example 13

A positive electrode was manufactured in the same manner as in Example 14, except that the same positive-electrode mixture containing slurry as that prepared in Comparative Example 10 was used and the applied film of the positive-electrode mixture containing slurry was dried by using the drying furnace including three dryers and setting the most upstream dryer 1 to 110°C, the intermediate dryer 2 to 115°C, and the most downstream dryer 3 to 120°C. A non-aqueous electrolyte secondary battery was manufactured in the same manner as in Example 14, except that the positive electrode was used.

The low-temperature load characteristics and the 85°C storage characteristics of the non-aqueous electrolyte secondary batteries of Examples 14 to 18 and Comparative Examples 12 and 13 were evaluated using the same methods as those used to evaluate the battery of Example 1. Results of the above-described evaluation are shown in Table 6 together with the thickness of the positive-electrode mixture layer in the positive electrode, Rs, $\rho v$, and Rs/($\rho v \times$d). In Table 6, evaluation results of the low-temperature load characteristics and evaluation results of the 85°C storage characteristics are each shown as a relative value when the value of Example 14 is taken as 100.

Table 6

| | Positive electrode | | | | Non-aqueous electrolyte secondary battery | |
| --- | --- | --- | --- | --- | --- | --- |
| | Positive-electrode mixture layer thickness (μm) | $\rho v$ (Ωcm) | Rs (Ωcm$^2$) | Rs/ ($\rho v \times$ d) | Low-temperature load characteristics | 85°C storage characteristics |
| Ex. 14 | 65 | 125 | 0.83 | 1.02 | 100 | 100 |
| Ex. 15 | 64 | 112 | 0.80 | 1.11 | 99 | 101 |
| Ex. 16 | 64 | 106 | 0.835 | 1.23 | 98 | 100 |
| Ex. 17 | 64 | 118 | 1.05 | 1.39 | 94 | 99 |
| Ex. 18 | 64 | 112 | 1.12 | 1.56 | 91 | 100 |
| Com.Ex. 12 | 64 | 110 | 1.21 | 1.72 | 82 | 99 |
| Com.Ex. 13 | 65 | 101 | 1.22 | 1.86 | 101 | 127 |

As shown in Table 6, the batteries of Examples 14 to 18 including the positive electrodes in which the thickness of the positive-electrode mixture layer was 58 µm or more and less than 68 µm and the value of Rs/(ρv×d) was appropriate achieved good results in both evaluation of the low-temperature load characteristics and evaluation of the 85°C storage characteristics compared with the batteries of Comparative Examples 12 and 13 including the positive electrodes for which the value of Rs/(ρv×d) was inappropriate, and the batteries of Examples 14 to 18 had high degrees of load characteristics and storage characteristics at the same time.

Example 19

A positive electrode was manufactured in the same manner as in Example 1, except that the applied film of the positive-electrode mixture containing slurry was dried by using the drying furnace including three dryers and setting the most upstream dryer 1 to 125°C, the intermediate dryer 2 to 120°C, and the most downstream dryer 3 to 125°C and the thickness of the positive-electrode mixture layer provided on each surface of the current collector in the positive electrode was changed to 76 µm.

Also, a negative electrode was manufactured in the same manner as in Example 1, except that the thickness of the negative-electrode mixture layer provided on each surface of the current collector was changed to 89 µm.

A non-aqueous electrolyte secondary battery was manufactured in the same manner as in Example 1, except that the above-described positive electrode and the negative electrode were used.

Example 20

A positive electrode was manufactured in the same manner as in Example 19, except that the applied film of the positive-electrode mixture containing slurry was dried by using the drying furnace including three dryers and setting the most upstream dryer 1 to 120°C, the intermediate dryer 2 to 120°C, and the most downstream dryer 3 to 125°C, and a non-aqueous electrolyte secondary battery was manufactured in the same manner as in Example 19, except that the positive electrode was used.

Example 21

A positive electrode was manufactured in the same manner as in Example 19, except that the applied film of the positive-electrode mixture containing slurry was dried by using the drying furnace including three dryers and setting the most upstream dryer 1 to 115°C, the intermediate dryer 2 to 120°C, and the most downstream dryer 3 to 125°C, and a non-aqueous electrolyte secondary battery was manufactured in the same manner as in Example 19, except that the positive electrode was used.

Example 22

A positive electrode was manufactured in the same manner as in Example 19, except that the applied film of the positive-electrode mixture containing slurry was dried by using the drying furnace including three dryers and setting the most upstream dryer 1 to 105°C, the intermediate dryer 2 to 120°C, and the most downstream dryer 3 to 125°C, and a non-aqueous electrolyte secondary battery was manufactured in the same manner as in Example 19, except that the positive electrode was used.

Example 23

A positive electrode was manufactured in the same manner as in Example 19, except that the applied film of the positive-electrode mixture containing slurry was dried by using the drying furnace including three dryers and setting the most upstream dryer 1 to 100°C, the intermediate dryer 2 to 115°C, and the most downstream dryer 3 to 125°C, and a non-aqueous electrolyte secondary battery was manufactured in the same manner as in Example 19, except that the positive electrode was used.

Example 24

A positive-electrode mixture containing slurry was prepared in the same manner as in Example 1, except that the concentration of solid contents was changed to 80 mass%, and a positive electrode was manufactured in the same manner as in Example 19, except that the positive-electrode mixture containing slurry was used and the applied film of the positive-electrode mixture containing slurry was dried by using the drying furnace including three dryers and setting the most upstream dryer 1 to 125°C, the intermediate dryer 2 to 125°C, and the most downstream dryer 3 to 125°C. A non-aqueous electrolyte secondary battery was manufactured in the same manner as in Example 19, except that the positive electrode was used.

Comparative Example 14

A positive electrode was manufactured in the same manner as in Example 19, except that the applied film of the positive-electrode mixture containing slurry was dried by using the drying furnace including three dryers and setting the most upstream dryer 1 to 100°C, the intermediate dryer 2 to 110°C, and the most downstream dryer 3 to 125°C and the thickness of the positive-electrode mixture layer provided on each surface of the current collector in the positive electrode was changed to 77 $\mu$m. A non-aqueous electrolyte secondary battery was manufactured in the same manner as in Example 19, except that the positive electrode was used.

Comparative Example 15

A positive electrode was manufactured in the same manner as in Example 19, except that the same positive-electrode mixture containing slurry as that prepared in Comparative Example 1 was used, the applied film of the positive-electrode mixture containing slurry was dried by using the drying furnace including three dryers and setting the most upstream dryer 1 to 115°C, the intermediate dryer 2 to 120°C, and the most downstream dryer 3 to 125°C, and the thickness of the positive-electrode mixture layer provided on each surface of the current collector in the positive electrode was changed to 77 $\mu$m. A non-aqueous electrolyte secondary battery was manufactured in the same manner as in Example 19, except that the positive electrode was used.

The low-temperature load characteristics and the 85°C storage characteristics of the non-aqueous electrolyte secondary batteries of Examples 19 to 24 and Comparative Examples 14 and 15 were evaluated using the same methods as those used to evaluate the battery of Example 1. Results of the above-described evaluation are shown in Table 7 together with the thickness of the positive-electrode mixture layer in the positive electrode, Rs, pv, and Rs/(pv×d). In Table 7, evaluation results of the low-temperature load characteristics and evaluation results of the 85°C storage characteristics are each shown as a relative value when the value of Example 19 is taken as 100.

Table 7

| | Positive electrode | | | | Non-aqueous electrolyte secondary battery | |
|---|---|---|---|---|---|---|
| | Positive-electrode mixture layer thickness ($\mu$m) | $\rho$v ($\Omega$cm) | Rs ($\Omega$cm$^2$) | Rs/ ($\rho$v× d) | Low-temperature load characteristics | 85°C storage characteristics |
| Ex. 19 | 76 | 1.52 | 0.0118 | 1.02 | 100 | 100 |
| Ex. 20 | 76 | 1.57 | 0.0162 | 1.36 | 99 | 100 |
| Ex. 21 | 76 | 1.51 | 0.0192 | 1.67 | 97 | 101 |
| Ex. 22 | 76 | 1.56 | 0.0286 | 2.41 | 87 | 100 |
| Ex. 23 | 76 | 1.55 | 0.1123 | 9.53 | 84 | 98 |
| Ex. 24 | 76 | 1.57 | 0.0123 | 1.03 | 100 | 100 |
| Com. Ex. 14 | 77 | 1.52 | 0.302 | 25.8 | 51 | 98 |
| Com. Ex. 15 | 77 | 1.37 | 0.255 | 24.2 | 99 | 108 |

As shown in Table 7, the batteries of Examples 19 to 24 including the positive electrodes in which the thickness of the positive-electrode mixture layer was 68 $\mu$m or more and 80 $\mu$m or less and the value of Rs/($\rho$v×d) was appropriate achieved good results in both evaluation of the low-temperature load characteristics and evaluation of the 85°C storage characteristics compared with the batteries of Comparative Examples 14 and 15 including the positive electrodes for which the value of Rs/($\rho$v×d) was inappropriate, and the batteries of Examples 19 to 24 had high degrees of load characteristics and storage characteristics at the same time.

Example 25

A positive electrode was manufactured in the same manner as in Example 1, except that the same positive-electrode mixture containing slurry as that prepared in Example 1 was used, the applied film of the positive-electrode mixture containing slurry was dried by using the drying furnace including three dryers and setting the most upstream dryer 1 to 125°C, the intermediate dryer 2 to 120°C, and the most downstream dryer 3 to 120°C, and the thickness of the positive-electrode mixture layer provided on each surface of the current collector in the positive electrode was changed to 70 μm.

Also, a negative electrode was manufactured in the same manner as in Example 1, except that the thickness of the negative-electrode mixture layer provided on each surface of the current collector was changed to 81 μm.

A non-aqueous electrolyte secondary battery was manufactured in the same manner as in Example 1, except that the above-described positive electrode and the negative electrode were used.

Example 26

A positive electrode was manufactured in the same manner as in Example 25, except that the applied film of the positive-electrode mixture containing slurry was dried by using the drying furnace including three dryers and setting the most upstream dryer 1 to 120°C, the intermediate dryer 2 to 115°C, and the most downstream dryer 3 to 120°C, and a non-aqueous electrolyte secondary battery was manufactured in the same manner as in Example 25, except that the positive electrode was used.

Example 27

A positive electrode was manufactured in the same manner as in Example 25, except that the applied film of the positive-electrode mixture containing slurry was dried by using the drying furnace including three dryers and setting the most upstream dryer 1 to 120°C, the intermediate dryer 2 to 120°C, and the most downstream dryer 3 to 120°C, and a non-aqueous electrolyte secondary battery was manufactured in the same manner as in Example 25, except that the positive electrode was used.

Example 28

A positive electrode was manufactured in the same manner as in Example 1, except that the applied film of the positive-electrode mixture containing slurry was dried by using the drying furnace including three dryers and setting the most upstream dryer 1 to 115°C, the intermediate dryer 2 to 120°C, and the most downstream dryer 3 to 120°C and the thickness of the positive-electrode mixture layer provided on each surface of the current collector was changed to 69 μm, and a non-aqueous electrolyte secondary battery was manufactured in the same manner as in Example 19, except that the positive electrode was used.

Example 29

A positive electrode was manufactured in the same manner as in Example 25, except that the applied film of the positive-electrode mixture containing slurry was dried by using the drying furnace including three dryers and setting the most upstream dryer 1 to 115°C, the intermediate dryer 2 to 115°C, and the most downstream dryer 3 to 120°C, and a non-aqueous electrolyte secondary battery was manufactured in the same manner as in Example 25, except that the positive electrode was used.

Comparative Example 16

A positive electrode was manufactured in the same manner as in Example 25, except that the applied film of the positive-electrode mixture containing slurry was dried by using the drying furnace including three dryers and setting the most upstream dryer 1 to 110°C, the intermediate dryer 2 to 115°C, and the most downstream dryer 3 to 120°C, and a non-aqueous electrolyte secondary battery was manufactured in the same manner as in Example 25, except that the positive electrode was used.

Comparative Example 17

A positive electrode was manufactured in the same manner as in Example 25, except that the same positive-electrode mixture containing slurry as that prepared in Comparative Example 1 was used and the applied film of the positive-electrode mixture containing slurry was dried by using the drying furnace including three dryers and setting the most upstream dryer 1 to 110°C, the intermediate dryer 2 to 110°C, and the most downstream dryer 3 to 125°C, and a non-aqueous electrolyte secondary battery was manufactured in the same manner as in Example 25, except that the positive electrode was used.

Example 30

A positive electrode including undercoat layers was manufactured in the same manner as in Example 25, except that a current collector provided with undercoat layers formed on both surfaces in the same manner as in Example 11 was used and the applied film of the positive-electrode mixture containing slurry was dried by using the drying furnace including three dryers and setting the most upstream dryer 1 to 115°C, the intermediate dryer 2 to 120°C, and the most downstream dryer 3 to 120°C. A non-aqueous electrolyte secondary battery was manufactured in the same manner as in Example 25, except that the positive electrode was used. Note that the positive-electrode mixture layers including the undercoat layers contained the positive-electrode active material in an amount of 93.95 mass%, the conductive assistant in an amount of 4.05 mass%, and the binder in an amount of 2.0 mass%.

Example 31

A positive electrode including undercoat layers was manufactured in the same manner as in Example 30, except that the applied film of the positive-electrode mixture containing slurry was dried by using the drying furnace including three dryers and setting the most upstream dryer 1 to 120°C, the intermediate dryer 2 to 120°C, and the most downstream dryer 3 to 120°C, and a non-aqueous electrolyte secondary battery was manufactured in the same manner as in Example 30, except that the positive electrode was used.

Example 32

A positive electrode including undercoat layers was manufactured in the same manner as in Example 30, except that the applied film of the positive-electrode mixture containing slurry was dried by using the drying furnace including three dryers and setting the most upstream dryer 1 to 120°C, the intermediate dryer 2 to 115°C, and the most downstream dryer 3 to 120°C, and a non-aqueous electrolyte secondary battery was manufactured in the same manner as in Example 30, except that the positive electrode was used.

Comparative Example 18

A positive electrode including undercoat layers was manufactured in the same manner as in Example 30, except that the applied film of the positive-electrode mixture containing slurry was dried by using the drying furnace including three dryers and setting the most upstream dryer 1 to 125°C, the intermediate dryer 2 to 120°C, and the most downstream dryer 3 to 120°C, and a non-aqueous electrolyte secondary battery was manufactured in the same manner as in Example 30, except that the positive electrode was used.

The low-temperature load characteristics and the 85°C storage characteristics of the non-aqueous electrolyte secondary batteries of Examples 25 to 32 and Comparative Examples 16 to 18 were evaluated using the same methods as those used to evaluate the battery of Example 1. Results of the above-described evaluation are shown in Table 8 together with the thickness of the positive-electrode mixture layer in the positive electrode, Rs, $\rho v$, and $Rs/(\rho v \times d)$. In Table 8, evaluation results of the low-temperature load characteristics and evaluation results of the 85°C storage characteristics are each shown as a relative value when the value of Example 25 is taken as 100.

Table 8

| | Positive electrode | | | | Non-aqueous electrolyte secondary battery | |
| --- | --- | --- | --- | --- | --- | --- |
| | Positive-electrode mixture layer thickness ($\mu$m) | $\rho v$ ($\Omega$cm) | Rs ($\Omega$cm$^2$) | Rs/ ($\rho v \times$ d) | Low-temperature load characteristics | 85°C storage characteristics |
| Ex. 25 | 70 | 1.41 | 0.0098 | 0.99 | 100 | 100 |
| Ex. 26 | 70 | 1.47 | 0.0131 | 1.27 | 99 | 99 |
| Ex. 27 | 70 | 1.39 | 0.0151 | 1.55 | 97 | 101 |
| Ex. 28 | 69 | 1.42 | 0.0198 | 2.02 | 93 | 99 |
| Ex. 29 | 70 | 1.45 | 0.0909 | 8.96 | 91 | 98 |
| Ex. 30 | 70 | 1.40 | 0.0080 | 0.82 | 95 | 99 |

(continued)

| | Positive electrode | | | | Non-aqueous electrolyte secondary battery | |
| --- | --- | --- | --- | --- | --- | --- |
| | Positive-electrode mixture layer thickness ($\mu$m) | $\rho v$ ($\Omega cm$) | Rs ($\Omega cm^2$) | Rs/ ($\rho v \times d$) | Low-temperature load characteristics | 85°C storage characteristics |
| Ex. 31 | 70 | 1.43 | 0.0099 | 0.99 | 99 | 103 |
| Ex. 32 | 70 | 1.42 | 0.0076 | 0.76 | 95 | 103 |
| Com. Ex. 16 | 70 | 1.44 | 0.1271 | 12.6 | 51 | 99 |
| Com. Ex. 17 | 70 | 1.09 | 0.1030 | 13.5 | 99 | 108 |
| Com. Ex. 18 | 70 | 1.46 | 0.0050 | 0.49 | 88 | 108 |

As shown in Table 8, the batteries of Examples 25 to 32 including the positive electrodes in which the thickness of the positive-electrode mixture layer was 68 $\mu$m or more and 80 $\mu$m or less and the value of Rs/($\rho v \times d$) was appropriate achieved good results in both evaluation of the low-temperature load characteristics and evaluation of the 85°C storage characteristics compared with the batteries of Comparative Examples 16 to 18 including the positive electrodes for which the value of Rs/($\rho v \times d$) was inappropriate, and the batteries of Examples 25 to 32 had high degrees of load characteristics and storage characteristics at the same time.

The present invention can be embodied in forms other than those described above without departing from the gist of the present invention. The embodiments disclosed in the present application are examples, and the present invention is not limited to those embodiments. The scope of the present invention should be construed in view of the appended claims, rather than the foregoing description, and all changes that come within the meaning and range of equivalency of the claims are intended to be embraced therein.

Industrial Applicability

A non-aqueous electrolyte secondary battery according to the present invention has excellent load characteristics and storage characteristics as described above, and can be preferably applied particularly to applications in which it is necessary to discharge the battery with a large current, as well as applications in which conventionally-known non-aqueous electrolyte secondary batteries are used. Also, a positive electrode for a non-aqueous electrolyte secondary battery according to the present invention can constitute the non-aqueous electrolyte secondary battery according to the present invention.

Description of Reference Numerals

1    Non-aqueous electrolyte secondary battery
2    Electrode assembly
3    Positive-electrode external terminal
4    Negative-electrode external terminal
5    Laminate film exterior body

**Claims**

1.  A positive electrode for a non-aqueous electrolyte secondary battery comprising a positive-electrode mixture layer containing a positive-electrode active material and a conductive assistant on one surface or both surfaces of a current collector,

    wherein the positive-electrode mixture layer on one surface of the current collector has a thickness of 35 $\mu$m or more and less than 58 $\mu$m, and

Rs/($\rho v \times d$) is 1.0±0.2, where Rs is an interface resistance ($\Omega cm^2$) between the positive-electrode mixture layer and the current collector, pv is a volume resistivity (SZcm) of the positive-electrode mixture layer, and d is the thickness (cm) of the positive-electrode mixture layer.

2. The positive electrode for a non-aqueous electrolyte secondary battery according to claim 1,
wherein the thickness of the positive-electrode mixture layer on one surface of the current collector is 38 $\mu$m or more and less than 58 $\mu$m.

3. A positive electrode for a non-aqueous electrolyte secondary battery comprising a positive-electrode mixture layer containing a positive-electrode active material and a conductive assistant on one surface or both surfaces of a current collector,

wherein the positive-electrode mixture layer on one surface of the current collector has a thickness of 58 $\mu$m or more and less than 68 $\mu$m, and
Rs/($\rho v \times d$) is 0.55 to 1.6, where Rs is an interface resistance ($\Omega cm^2$) between the positive-electrode mixture layer and the current collector, pv is a volume resistivity (SZcm) of the positive-electrode mixture layer, and d is the thickness (cm) of the positive-electrode mixture layer.

4. The positive electrode for a non-aqueous electrolyte secondary battery according to claim 3,
wherein the Rs/($\rho v \times d$) is 0.8 to 1.26.

5. A positive electrode for a non-aqueous electrolyte secondary battery comprising a positive-electrode mixture layer containing a positive-electrode active material and a conductive assistant on one surface or both surfaces of a current collector,

wherein the positive-electrode mixture layer on one surface of the current collector has a thickness of 68 $\mu$m or more and 80 $\mu$m or less, and
Rs/($\rho v \times d$) is 0.55 to 10, where Rs is an interface resistance ($\Omega cm^2$) between the positive-electrode mixture layer and the current collector, pv is a volume resistivity (SZcm) of the positive-electrode mixture layer, and d is the thickness (cm) of the positive-electrode mixture layer.

6. The positive electrode for a non-aqueous electrolyte secondary battery according to claim 5,
wherein the Rs/($\rho v \times d$) is 0.55 to 3.0.

7. The positive electrode for a non-aqueous electrolyte secondary battery according to claim 5,
wherein the Rs/($\rho v \times d$) is 0.7 to 1.7.

8. A non-aqueous electrolyte secondary battery comprising:

a positive electrode;
a negative electrode;
a separator interposed between the positive electrode and the negative electrode; and
a non-aqueous electrolyte,
wherein the positive electrode is the positive electrode for a non-aqueous electrolyte secondary battery according to any one of claims 1 to 7.

9. The non-aqueous electrolyte secondary battery according to claim 8,
wherein, in a charged state, the negative electrode includes: an aluminum foil or an aluminum alloy foil; and a Li-Al alloy formed through a reaction with Li ions desorbed from the positive electrode.

10. A method for manufacturing a positive electrode for a non-aqueous electrolyte secondary battery, comprising, when forming a positive-electrode mixture layer containing a positive-electrode active material and a conductive assistant on one surface or both surfaces of a current collector:

adjusting a thickness of the positive-electrode mixture layer on one surface of the current collector to 35 $\mu$m or more and less than 58 $\mu$m; and
adjusting Rs/($\rho v \times d$) to 1.0±0.2, where Rs is an interface resistance ($\Omega cm^2$) between the positive-electrode mixture layer and the current collector, pv is a volume resistivity (SZcm) of the positive-electrode mixture layer, and d is the thickness (cm) of the positive-electrode mixture layer.

11. A method for manufacturing a positive electrode for a non-aqueous electrolyte secondary battery, comprising, when forming a positive-electrode mixture layer containing a positive-electrode active material and a conductive assistant on one surface or both surfaces of a current collector:

adjusting a thickness of the positive-electrode mixture layer on one surface of the current collector to 58 $\mu$m or more and less than 68 $\mu$m; and
adjusting Rs/($\rho$v$\times$d) to 0.55 to 1.6, where Rs is an interface resistance ($\Omega$cm$^2$) between the positive-electrode mixture layer and the current collector, pv is a volume resistivity (SZcm) of the positive-electrode mixture layer, and d is the thickness (cm) of the positive-electrode mixture layer.

12. A method for manufacturing a positive electrode for a non-aqueous electrolyte secondary battery, comprising, when forming a positive-electrode mixture layer containing a positive-electrode active material and a conductive assistant on one surface or both surfaces of a current collector:

adjusting a thickness of the positive-electrode mixture layer on one surface of the current collector to 68 $\mu$m or more and 80 $\mu$m or less; and
adjusting Rs/($\rho$v$\times$d) to 0.55 to 10, where Rs is an interface resistance ($\Omega$cm$^2$) between the positive-electrode mixture layer and the current collector, pv is a volume resistivity (SZcm) of the positive-electrode mixture layer, and d is the thickness (cm) of the positive-electrode mixture layer.

13. A method for manufacturing a non-aqueous electrolyte secondary battery including a positive electrode, a negative electrode, a separator interposed between the positive electrode and the negative electrode, and a non-aqueous electrolyte,
wherein a positive electrode for a non-aqueous electrolyte secondary battery manufactured using the method for manufacturing a positive electrode for a non-aqueous electrolyte secondary battery according to any one of claims 10 to 12 is used as the positive electrode.

14. A method for inspecting a positive electrode for a non-aqueous electrolyte secondary battery including a positive-electrode mixture layer containing a positive-electrode active material and a conductive assistant on one surface or both surfaces of a current collector, the method comprising:

a step of measuring an interface resistance Rs ($\Omega$cm$^2$) between the positive-electrode mixture layer and the current collector, a volume resistivity pv ($\Omega$cm) of the positive-electrode mixture layer, and a thickness d (cm) of the positive-electrode mixture layer, and calculating a value of Rs/($\rho$v$\times$d) with respect to the positive electrode for a non-aqueous electrolyte secondary battery; and
a step of selecting a non-aqueous electrolyte secondary battery to which the positive electrode for a non-aqueous electrolyte secondary battery is to be applied, based on the value of Rs/($\rho$v$\times$d).

FIG. 1

FIG. 2

## INTERNATIONAL SEARCH REPORT

International application No.

**PCT/JP2021/038163**

### A. CLASSIFICATION OF SUBJECT MATTER

*H01M 4/13*(2010.01)i; *H01M 4/62*(2006.01)i; *H01M 4/66*(2006.01)n
FI:   H01M4/13; H01M4/62 Z; H01M4/66 A

According to International Patent Classification (IPC) or to both national classification and IPC

### B. FIELDS SEARCHED

Minimum documentation searched (classification system followed by classification symbols)

H01M4/13; H01M4/62; H01M4/66

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 6176381 B1 (SUMITOMO OSAKA CEMENT CO., LTD.) 09 August 2017 (2017-08-09) | 1-14 |
| A | JP 6288340 B1 (SUMITOMO OSAKA CEMENT CO., LTD.) 07 March 2018 (2018-03-07) | 1-14 |
| A | JP 2018-56054 A (SUMITOMO OSAKA CEMENT CO., LTD.) 05 April 2018 (2018-04-05) | 1-14 |
| A | WO 2018/016528 A1 (NEC ENERGY DEVICES, LTD) 25 January 2018 (2018-01-25) | 1-14 |
| A | JP 6259952 B1 (SEKISUI CHEMICAL CO., LTD.) 10 January 2018 (2018-01-10) | 1-14 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 November 2021** | **22 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/038163**

| Patent document cited in search report | | | Publication date (day/month/year) | Patent family member(s) | | Publication date (day/month/year) |
|---|---|---|---|---|---|---|
| JP | 6176381 | B1 | 09 August 2017 | US 2018/0097225 A1 | | |
| JP | 6288340 | B1 | 07 March 2018 | US 2018/0277887 A1 | | |
| | | | | EP 3379615 A1 | | |
| | | | | CN 108630910 A | | |
| JP | 2018-56054 | A | 05 April 2018 | (Family: none) | | |
| WO | 2018/016528 | A1 | 25 January 2018 | US 2019/0280283 A1 | | |
| | | | | EP 3490037 A1 | | |
| | | | | CN 109417161 A | | |
| JP | 6259952 | B1 | 10 January 2018 | US 2019/0074517 A1 | | |
| | | | | WO 2017/170898 A1 | | |
| | | | | EP 3439088 A1 | | |
| | | | | CN 108028387 A | | |
| | | | | KR 10-2018-0129756 A | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018016528 A